# EUROPEAN PATENT APPLICATION

(11) **EP 1 208 750 A1**
(43) Date of publication of application: **29.05.2002**
(21) Application number: 01125406.7
(22) Date of filing: 31.10.2001
(51) Int. Cl.: A21C 9/08

(54) **Apparatus for the automatic production of partially-baked loaves of bread**

(30) Priority: 08.11.2000 IT PD000255
(71) Applicant: Soveda S.r.l., 35020 Due Carrare (Padova) (IT)
(72) Inventor: Morelato, Tommaso, 35100 Padova (IT)
(74) Representative: Modiano, Guido, Dr.-Ing.

(57) **Abstract**

An apparatus (10) for the automatic production of partially-baked loaves, comprising at least one production line (11a,11b) that stretches from a kneading machine (12) to a packaging and storage station (13) and comprising a molding machine (11a,11b), a proving chamber (20a,20b), an oven (25a,25b) and a blast chiller (27a,27b), arranged at robotized means (15a,23a) for moving the semi-processed product from one processing station to another.

## Description

The present invention relates to an apparatus for the automatic production of partially-baked loaves of bread.

The distribution and sale of partially-baked loaves at food shops or the like have become increasingly widespread; indeed because of this characteristic of being partially baked, the loaves can be preserved for long periods.

Before being consumed, this type of loaf must undergo final baking, which can be performed advantageously by the user in his household oven.

The apparatuses that currently produce partially-baked loaves are constituted by machines that are rigidly connected, each machine performing a specific step of the process for producing the finished product.

This type of apparatus is dedicated uniquely to the production of one type of loaf, or of a few others, and is scarcely flexible from the point of view of production, although it has the great advantage of being managed fully automatically.

As an alternative, the apparatuses can be constituted by a plurality of machines, each capable of performing a specific step of the process.

In this case, the connection among the machines is provided by resorting workers.

In this manner, the apparatus is particularly flexible from the point of view of the variety of products that can be produced but is characterized by low productivity.

The aim of the present invention is to provide an apparatus for the automatic production of partially-baked loaves that solves or substantially reduces the problems of known types of apparatus.

Within this aim, an object of the present invention is to provide an apparatus that provides high operating flexibility.

Another object is to provide an apparatus by means of which it is possible to reduce labor costs.

Another important object is to provide an apparatus that has a high productivity.

Another object is to provide an apparatus by using equipment and technologies of the known type.

This aim and these and other objects that will become better apparent hereinafter are achieved by an apparatus for the automatic production of partially-baked loaves, characterized in that it comprises at least one production line that stretches from a kneading machine to a packaging and storage station, said at least one production line comprising a molding machine, a proving chamber, an oven and a blast chiller, arranged at robotized means for moving the semi-processed product from one processing station to another.

Further characteristics and advantages of the invention will become better apparent from the description of a preferred but not exclusive embodiment thereof, illustrated only by way of non-limitative example in the accompanying drawings, wherein:

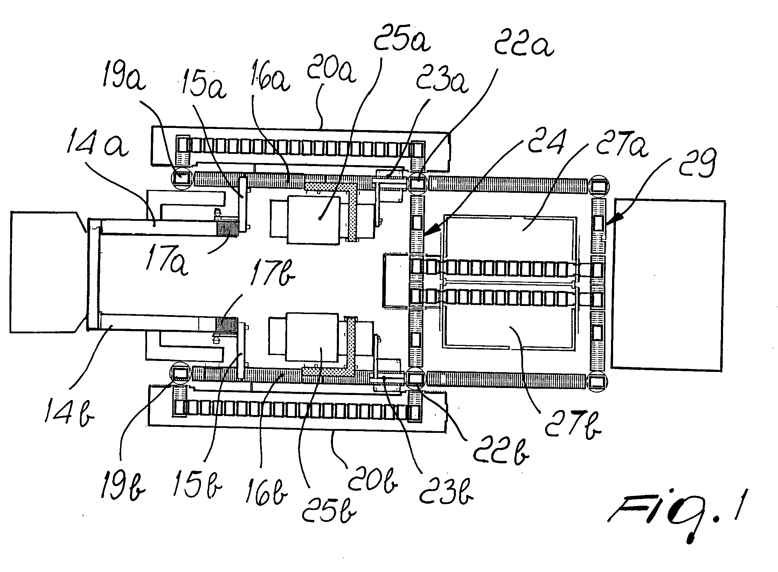

Figure 1 is a schematic plan view of an embodiment of the apparatus according to the invention;

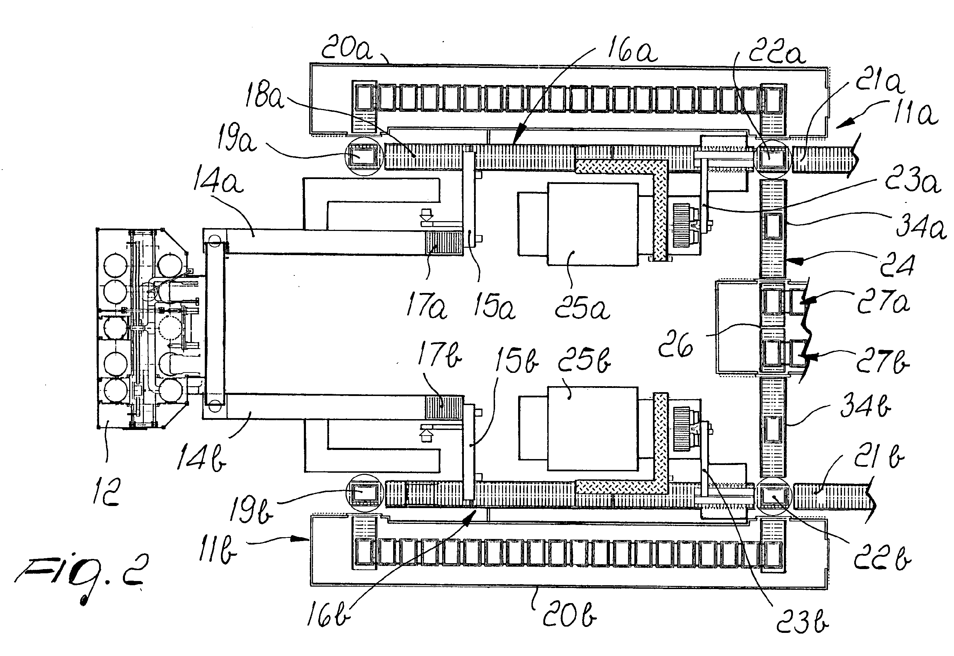

Figure 2 is a view of the initial portion of the apparatus of Figure 1;

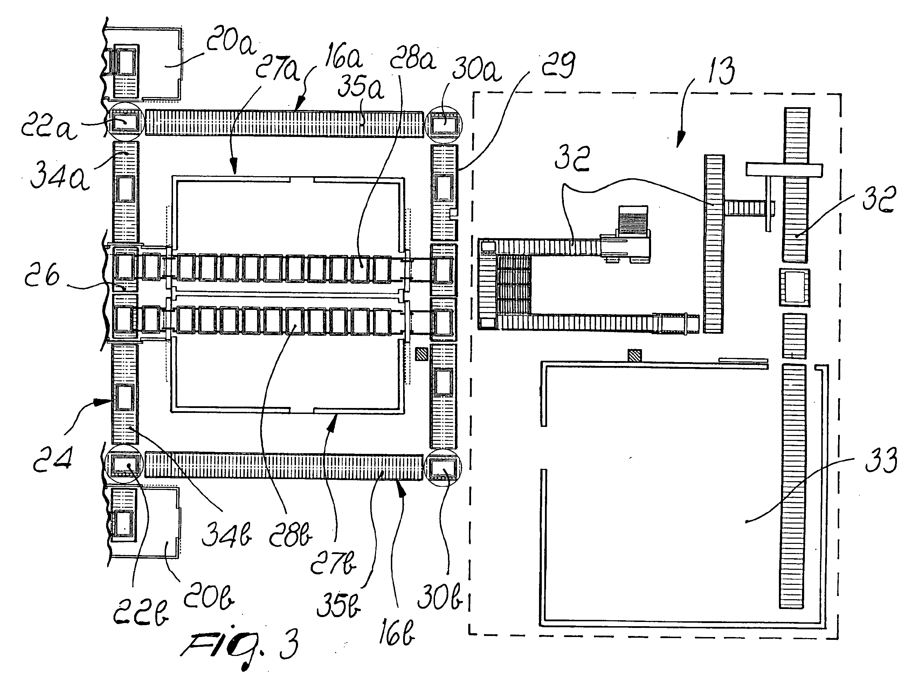

Figure 3 is a view of the final portion of the same apparatus.

With reference to the figures, an apparatus for the automatic production of partially-baked loaves, according to the invention, is generally designated by the reference numeral 10.

The apparatus 10 is constituted by two longitudinally elongated production lines, respectively designated by the reference numerals 11a and 11b, which lie parallel to each other and start with a common kneading machine 12 and end with a common station for packaging and storing the finished product, generally designated by the reference numeral 13.

The two production lines 11a and 11b are substantially mirror-symmetrical, with respect to their longitudinal axis, from the kneading machine 12 to the packaging and storage station 13; therefore, only the production line 11a is described for the sake of simplicity.

A molding machine 14a is arranged at the outlet of the kneading machine 12.

At a final portion 17a of the molding machine 14a there is a first robot 15a capable of picking up the trays, not shown in the figure, for supporting the semi-processed product, and of arranging them at a first linear chain conveyor 16a.

The first conveyor 16a runs along the entire length of the line 11a, and the processing stations that constitute line 11a are arranged adjacent thereto.

The first robot 15a picks up a tray from the final portion 17a of the molding machine 14a, arranging it on the first conveyor 16a proximate to its initial portion 18a.

From there, the tray is moved to a first turntable 19a, which is adjacent to the initial portion 18a of the first conveyor and allows the tray to enter a proving chamber 20a that runs parallel to the first conveyor 16a and whose outlet is located at a median portion 21a of the first conveyor 16a.

A second turntable 22a is arranged on the median portion 21a at the outlet of the proving chamber 20a.

A second linear conveyor 24 starts at a second turntable 22a at right angles to the first conveyor 16a and ends at the second turntable 22b arranged in the median portion 21b of the first conveyor 16b of the production line 11b.

A second robot 23a is arranged at the second turntable 22a and picks up a tray from the portion 34a of the second conveyor 24 adjacent to the second turntable 22a, arranging it at an oven 25a.

Vice versa, after the operating step inside the oven 25a has ended, the second robot 23a picks up the tray and places it on the second conveyor 24.

At an intermediate portion 26 of the second conveyor 24 there are two blast chillers 27a and 27b that belong respectively to the production lines 11a and 11b.

The second conveyor 24 feeds the blast chillers 27a and 27b respectively with the trays that arrive from the conveyors 16a and 16b in output from the proving chambers 20a and 20b.

The two blast chillers 27a and 27b are arranged mutually adjacent, run longitudinally parallel to the production lines 11a and 11b, and are each provided internally with a conveyance line, designated by the reference numerals 28a and 28b respectively.

At the outlet of the blast chillers 27a and 27b there is a third linear conveyor 29 that runs parallel to the second conveyor 24 at right angles to the first conveyors 16a and 16b.

The third conveyor 29 is connected by way of third turntables 30a and 30b arranged respectively after the final portion 35a and 35b of the first conveyors 16a and 16b.

Adjacent to the third conveyor 29, opposite the blast chillers 27a and 27b, there is the station 13 for packaging and storing the pre-baked loaf.

The station 13 comprises a plurality of conveyor belts 32 along which the pre-baked loaf is packaged; said belts convey the finished and packaged product into a storage section generally designated by the reference numeral 33.

As regards operation, it is evident that the semi-processed product supported by a tray in output from the molding machine 14a is arranged by means of the first robot 15a on the first conveyor belt 16a and from there enters the proving chamber 20a by passing through the first turntable 19a.

The semi-processed product, after leaving the proving chamber 20a, is repositioned on the first conveyor 16a and from there, by means of the second turntable 22a, on the second conveyor 24.

A second robot 23a picks up the semi-processed product from the second conveyor 24 and places it at the oven 25a.

Once this operating step also has ended, the second robot 23a places the semi-processed product again on the second conveyor 24, on which it advances toward the blast chiller 27a.

In output from the blast chiller 27a, the product has ended its treatment process and is located at the third conveyor 29; it is then placed at the conveyors 32 of the packaging and storage station 13 until it is arranged in the storage area 33.

The particular configuration of the two lines 11a and 11b allows a continuous movement of the semi-processed product simultaneously with a return of the tray from the storage and packaging station 13 to the molding machine 14a and 14b, by means of the conveyors 16a and 16b, 24 and 29, which are in turn connected, by means of the turntables 22a and 22b, 19a and 19b, and 30a and 30b.

In practice it has been found that the present invention has achieved the intended aim and objects.

An apparatus for the production of partially-baked loaves has in fact been provided which has great production flexibility since it has two functionally independent production lines and is fully automated.

Furthermore, the processing stations are functionally independent of each other.

The present invention is susceptible of numerous modifications and variations, all of which are within the scope of the inventive concept.

The technical details can be replaced with other technically equivalent elements.

The materials, so long as they are compatible with the contingent use, as well as the dimensions, may be any according to requirements.

The disclosures in Italian Patent Application No. PD2000A000255 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for the automatic production of partially-baked loaves, **characterized in that** it comprises at least one production line (11a,11b) that stretches from a kneading machine (12) to a packaging and storage station (13), said at least one production line comprising a molding machine (14a,14b), a proving chamber (20a,20b), an oven (25a,25b) and a blast chiller (27a,27b), arranged at robotized means (15a,23a) for moving the semi-processed product from one processing station to another.

2. The apparatus according to claim 1, **characterized in that** said robotized movement means comprise linear conveyors (16a,16b,24,29) and robots (15a,23a) for positioning and moving the semi-processed product from said conveyors to a processing station and vice versa.

3. The apparatus according to claim 2, **characterized in that** it comprises turntables (19a,22a) for connection between conveyors arranged contiguously but not in axial alignment.

4. The apparatus according to claims 2 and 3, **characterized in that** said robotized movement means are for pallets with a supporting tray for the semi-processed product.

5. The apparatus according to one or more of the preceding claims, **characterized in that** said robotized movement means comprise a first linear conveyor arranged between the kneading machine and the packaging and storage station, along the direction of longitudinal extension there being said molding machine (14a,14b) in turn arranged in succession to said kneading machine (12), said robots comprising a first robot (15a), for positioning and moving the semi-processed product from said molding machine to said first conveyor (16a), and a second robot (23a), for positioning and moving the semi-processed product from said oven (25a,25b) to said first conveyor (16a,6b), said proving chamber (20a,20b) and said blast chiller (27a,27b) being connected to the first conveyor (16a,16b) by means of turntables (19a,19b,22a,22b) and corresponding conveyors (24), said oven and said proving chamber (20a,20b) being arranged mutually opposite with respect to the direction of longitudinal extension of said first conveyor.

6. The apparatus according to claim 5, **characterized in that** it comprises two longitudinally elongated production lines (11a,11b) that run parallel to each other from said kneading machine (12) to said packaging and storage station (13), the blast chillers (27a,27b) of said two lines being arranged mutually adjacent between the first conveyors (16a,16b) and being connected thereto by means of said turntables (19a,19b), arranged in an intermediate portion of the first conveyors at the outlet of respective proving chambers (20a,20b), and of a common second linear conveyor (24), the inlets of said blast chillers being arranged at the intermediate portion of said second conveyor (24), said apparatus further comprising a third linear conveyor (29) arranged parallel to the second conveyor (24), at right angles to the first conveyors (16a,16b) and connected to their final portions by virtue of corresponding turntables, said third conveyor being arranged between the outlets of said blast chillers and said packaging and storage station.
